# EUROPÄISCHE PATENTANMELDUNG

(11) **EP 2 251 282 A1**
(43) Veröffentlichungstag der Anmeldung: **17.11.2010**
(21) Anmeldenummer: 10450083.0
(22) Anmeldetag: 12.05.2010
(51) Int. Cl.: B65G 45/12

(54) **Abstreifer für ein Förderband**

(30) Priorität: 12.05.2009 AT 7182009
(71) Anmelder: Hoessl, Peter, 4203 Altenberg (AT)
(72) Erfinder: Hoessl, Peter, 4203 Altenberg (AT)
(74) Vertreter: Hübscher, Helmut

(57) **Zusammenfassung**

Es wird ein Abstreifer für ein Förderband (6) mit einem lösbar an einer Schwinge (3) befestigten Halterungsprofil (2) für eine gegenüber dem Förderband (6) hochkant ausgerichteten Abstreifleiste (4) beschrieben, die in eine Nut (8) des Halterungsprofils (2) eingesetzt ist. Um einen Verschleißschutz zu erreichen, wird vorgeschlagen, dass die zumindest die Stirnseite (10) des Halterungsprofils (2) mit der Nut (8) abdeckende Abstreifleiste (4) einen abstehenden, in die Nut (8) eingreifenden Befestigungssteg (9) aufweist.

## Beschreibung

### Abstreifer für ein Förderband

Die Erfindung bezieht sich auf einen Abstreifer für ein Förderband mit einem lösbar an einer Schwinge befestigten Halterungsprofil für eine gegenüber dem Förderband hochkant ausgerichteten Abstreifleiste, die in eine Nut des Halterungsprofils eingesetzt ist.

Um die durch den Abstreifvorgang bedingten Belastungen der bevorzugt aus einem Hartmetall gefertigten, hochkant zum Förderband ausgerichteten Abstreifleiste auf die federbelastete Schwinge eines Abstreifers abtragen zu können, ohne die Abstreifleiste oder deren Befestigung zu gefährden, ist es bekannt (EP 1 388 506 B1), die Abstreifleiste in eine stirnseitige Nut eines üblicherweise L-förmigen Halterungsprofils einzusetzen, das über den gegenüber dem Schenkel mit der Abdeckleiste abgewinkelten Schenkel lösbar an der Schwinge befestigt ist. Nachteilig bei einer solchen Konstruktion ist allerdings, dass das mit Hilfe der Abstreifleiste vom Förderband abgelöste Gut über den die Abstreifleiste stirnseitig aufnehmenden Schenkel des Halterungsprofils abgeführt wird, der somit einem erheblichen Verschleiß unterworfen wird, sodass die Gefahr besteht, dass die Standzeit des nicht für eine solche Verschleißbelastung ausgelegten Halterungsprofils kürzer als die der Abstreifleiste ausfällt.

Der Erfindung liegt somit die Aufgabe zugrunde, einen Abstreifer der eingangs geschilderten Art für ein Förderband so auszugestalten, dass der Verschleiß des Halterungsprofils im Wesentlichen unterbunden werden kann, ohne auf eine vorteilhafte Befestigung der Abstreifleiste verzichten zu müssen.

Die Erfindung löst die gestellte Aufgabe dadurch, dass die zumindest die Stirnseite des Halterungsprofils mit der Nut abdeckende Abstreifleiste einen abstehenden, in die Nut eingreifenden Befestigungssteg aufweist.

Da zufolge dieser Maßnahme die Abstreifleiste quer zur Nut des Halterungsprofils verläuft und lediglich mit einem abstehenden Befestigungssteg in die Nut eingreift, deckt die Abstreifleiste das Halterungsprofil stirnseitig ab, sodass von der Abstreifleiste vom Förderband gelöstes Gut über die Abstreifleiste abgeleitet wird und das Halterungsprofil selbst nicht mehr mit dem abgelösten Gut in Berührung kommen kann. Die Befestigung der Abstreifleiste auf dem Halterungsprofil wird dadurch nicht beeinträchtigt, weil der Befestigungssteg wie die bekannten Abstreifleisten in eine Nut eingesetzt und beispielsweise durch ein Kleben in der Nut festgehalten werden kann. Außerdem kann das Halterungsprofil einfacher gestaltet werden. Die die Stirnseite des Halterungsprofils mit der Nut abdeckende Abstreifleiste bedingt ja aufgrund der quer zur Abstreifleiste verlaufenden Nut keinen abgewinkelten Schenkel mehr, um die Abstreifleiste über die Schwinge hochkant an das Förderband anzustellen.

Besonders vorteilhafte Konstruktionsverhältnisse ergeben sich, wenn die Abstreifleiste nicht nur das Halterungsprofil, sondern auch die Stirnseite der das Halterungsprofil tragenden Schwinge bzw. deren das Halterungsprofil aufnehmenden Arme abdeckt, weil in diesem Fall das vom Förderband abgelöste Gut mit Hilfe der Abstreifleiste über das Halterungsprofil und die Stirnseite der Schwinge hinweg abgleitet werden kann, was einen entsprechenden Verschleißschutz sowohl für das Halterungsprofil als auch die Schwinge mit sich bringt.

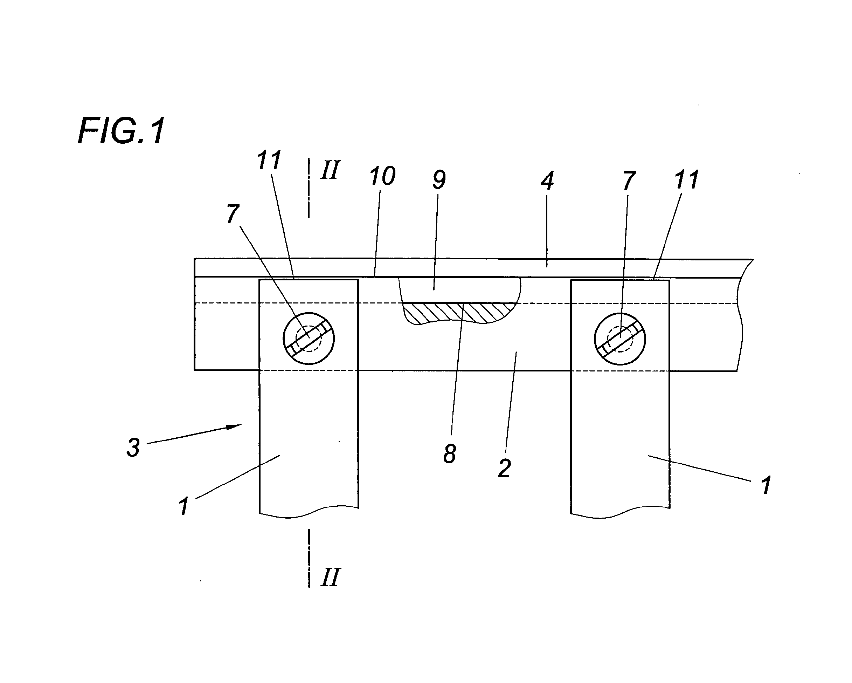

In der Zeichnung ist der Erfindungsgegenstand beispielsweise dargestellt. Es zeigen
Fig. 1 einen erfindungsgemäßen Abstreifer für ein Förderband ausschnittsweise in einer Vorderansicht und

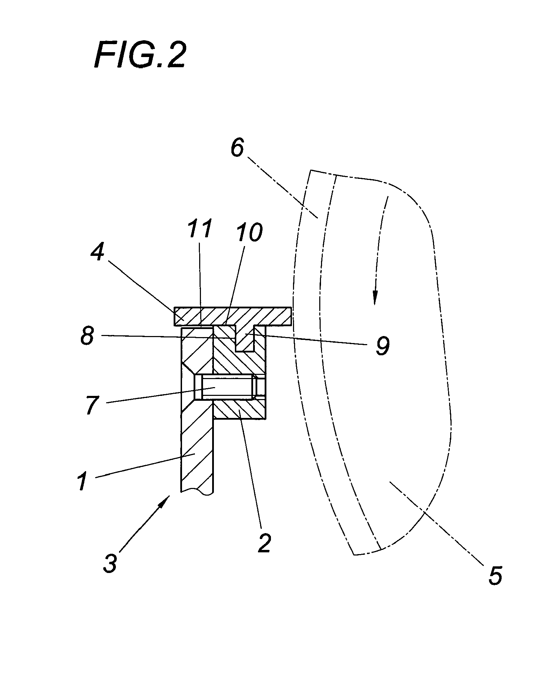

Fig. 2 diesen Abstreifer in einem Schnitt nach der Linie II-II der Fig. 1.

Der dargestellte Abstreifer weist in herkömmlicher Weise eine einzelne Tragarme 1 für ein Halterungsprofil 2 bildende Schwinge 3 auf, mit deren Hilfe eine in das Halterungsprofil 2 eingesetzte Abstreifleiste 4 hochkant an ein um eine Umlenkrolle 5 geführtes Förderband 6 federnd angestellt werden kann. Das Halterungsprofil 2 ist an den über die Profillänge verteilten Tragarmen 1 der Schwinge 3 mit Hilfe von Schrauben 7 lösbar befestigt und bildet eine stirnseitige Nut 8 zur Aufnahme eines von der Abstreifleiste 4 abstehenden Befestigungsstegs 9. Die Anordnung ist dabei so getroffen, dass die Abstreifleiste 4 nicht nur die Stirnseite 10 des Halterungsprofils 2, sondern auch die Stirnseite 11 der Tragarme 1 der Schwinge 3 gegenüber dem vom Förderband 6 durch die Abstreifleiste 4 abgelösten Fördergut abdeckt, sodass das abgelöste Fördergut über das Halterungsprofil 2 und die Schwinge 3 hinweg abgeleitet wird, was eine weitgehend verschleißfeste Konstruktion für das Halterungsprofil 2 und die Schwinge 3 mit sich bringt, insbesondere wenn diese auf der vom Förderband 6 abgekehrten Außenseite noch mit einer schützenden Schürze versehen wird.

Die Befestigung der Abstreifleiste 4 ändert sich im Vergleich zu den Befestigungsmöglichkeiten herkömmlicher, in Nuten eines Halterungsprofils eingesetzten Abstreifleisten nicht, weil der abstehende Befestigungssteg 9 in vergleichbarer Weise in der Nut 8 des Halterungsprofils 2, zum Beispiel durch eine Klebung, gesichert werden kann. Die Kraftabtragung von der Abstreifleiste 4 auf die Tragarme 1 der Schwinge 3 erfolgt einerseits über die Abstreifleiste 4, die ja an der Stirnseite 10 des Halterungsprofils 2 lastabtragend flächig anliegt, und anderseits über den in der Nut 8 formschlüssig abgestützten Befestigungssteg 9.

## Patentansprüche

1. Abstreifer für ein Förderband (6) mit einem lösbar an einer Schwinge (3) befestigten Halterungsprofil (2) für eine gegenüber dem Förderband (6) hochkant ausgerichteten Abstreifleiste (4), die in eine Nut (8) des Halterungsprofils (2) eingesetzt ist, **dadurch gekennzeichnet, dass** die zumindest die Stirnseite (10) des Halterungsprofils (2) mit der Nut (8) abdeckende Abstreifleiste (4) einen abstehenden, in die Nut (8) eingreifenden Befestigungssteg (9) aufweist.

2. Abstreifer nach Anspruch 1, **dadurch gekennzeichnet, dass** die Abstreifleiste (4) das Halterungsprofil (2) und die Stirnseite (11) der das Halterungsprofil (2) tragenden Schwinge (3) abdeckt.
